# EUROPEAN PATENT APPLICATION

(11) **EP 2 264 341 A2**
(43) Date of publication of application: **22.12.2010**
(21) Application number: 10251063.3
(22) Date of filing: 09.06.2010
(51) Int. Cl.: F16J 15/56, F16J 15/16

(54) **Pressure compensated dynamic seal for deep submergence electro-mechanical linear actuators**

(30) Priority: 13.06.2009 US 186819; 03.06.2010 US 792956
(71) Applicant: KOLLMORGEN CORPORATION, Radford, VA 24141 (US)
(72) Inventor: Wellman, Forrest Alexander, Massachusetts 01002 (US)
(74) Representative: Kenrick, Mark Lloyd

(57) **Abstract**

A pressure compensated dynamic seal assembly (26) for a deep submergence actuator (10). A pressure compensated isolation fluid (28) is supplied to an isolation region (34) established between a pair of opposed dynamic seals (36, 38) about a linear actuator ram (14). The isolation region is maintained at a pressure higher than an exterior fluid pressure surrounding the actuator so that any leakage past the first dynamic seal (36) will be in a direction out of the actuator, thereby avoiding any ingress of exterior fluid into the actuator. Leakage past the lower dynamic seal (38) can be tolerated because the isolation fluid is compatible with components of the drive mechanism (20) disposed within the interior (24) of the actuator. A load-bearing bushing (40) may be located between the first and lower seals.

## Description

### CROSS-REFERENCE TO RELATED APPLICATION

This application claims the benefit of U.S. Provisional Application No. 61/186,819 filed June 13, 2009, and incorporated herein by reference.

### FIELD OF THE INVENTION

This invention relates generally to the field of linear actuators, and more particularly to a deep submergence electro-mechanical linear actuator.

### BACKGROUND OF THE INVENTION

Hydraulic linear actuators are known for use in deep submergence applications, such as tube hatch actuators for submarines. Such actuators are mounted on the exterior of a submarine hull, and are exposed to large pressure variations during operation of the submarine, such as from atmospheric pressure to submergence pressures exceeding 1,000 psi. The ingress of seawater into such actuators is avoided because the operating pressure of the hydraulic working fluid is higher than the external seawater pressure. However, the hydraulic working fluid supply system for such actuators is complicated and costly to maintain, and there is a desire to replace such hydraulic actuators with electro-mechanical actuators.

Electro-mechanical actuators do not require a high pressure working fluid, and the internal pressure within the actuator housing may typically be near atmospheric pressure. Sealing against the ingress of sea water is imperative for ensuring the reliability of any actuator operating on the exterior of a submarine hull.

It is known to use a pressure compensated hydraulic seal for rotary actuators designed for deep submergence applications. Such seals require the pressurization of the interior region of the actuator with oil using a pressure compensation system that maintains the pressure within the actuator to a value that is consistently somewhat higher than the pressure of the surrounding seawater by means of a bellows, bladder, constant force spring, etc. The relatively higher pressure within the actuator interior ensures that there is no leakage of sea water into the actuator past the drive shaft gland. One possible sealing arrangement for linear actuators is to use the same pressure compensated seal design as is used for rotary actuators. However, a typical submarine tube hatch actuator must be large enough to generate 50,000 - 100,000 pounds of force and may have a ram cross-sectional diameter of about 6 inches. As the ram moves into and out of the actuator interior during operation, the open interior volume of the actuator (total volume minus volume displaced by the ram and other drive mechanism components) would vary greatly, and thus the volume of pressure-compensated fluid required for the sealing function would also vary greatly. The pressure compensating apparatus that would be required for hydraulic sealing of such an apparatus would need to accommodate this substantial variation of the interior volume of the actuator as the ram travels into or out of the housing, and as such, would be large, expensive and difficult to maintain.

### BRIEF DESCRIPTION OF THE INVENTION

An embodiment of the invention for a deep submergence linear actuator comprises a housing and a ram extending from within the housing through an open end of the housing. An electro-mechanical drive mechanism is disposed within the housing distal to the open end of the housing and is configured to drive the ram in selectively reversible linear motion relative to the housing. A first dynamic seal is disposed between an outside surface of the ram and an inside surface of the housing inboard of the open end of the housing. A second dynamic seal is disposed between the outside surface of the ram and the inside surface of the housing and is disposed between the first dynamic seal and the electro-mechanical drive mechanism, thereby forming an isolation region defined between the ram and the housing and between the first and second dynamic seals. In addition, a pressure compensated isolation fluid supply is in fluid communication with the isolation region for maintaining an isolation fluid in the isolation region at a pressure greater than a fluid pressure existing exterior to the housing.

The isolation region is maintained at a pressure higher than an exterior fluid pressure surrounding the actuator so that any leakage past the first dynamic seal will be in a direction out of the actuator, thereby avoiding any ingress of exterior fluid into the actuator. Leakage past the lower dynamic seal can be tolerated because the isolation fluid is compatible with components of the drive mechanism disposed within the interior of the actuator.

### BRIEF DESCRIPTION OF THE DRAWINGS

The invention is explained in the following description in view of the drawings that show:

FIG. 1 is a cross-section view of a submersible linear actuator in accordance with one embodiment of the present invention.

FIG. 2 is an expanded view of a portion of the illustration of FIG. 1 showing details of the pressure compensated seal.

### DETAILED DESCRIPTION OF THE INVENTION

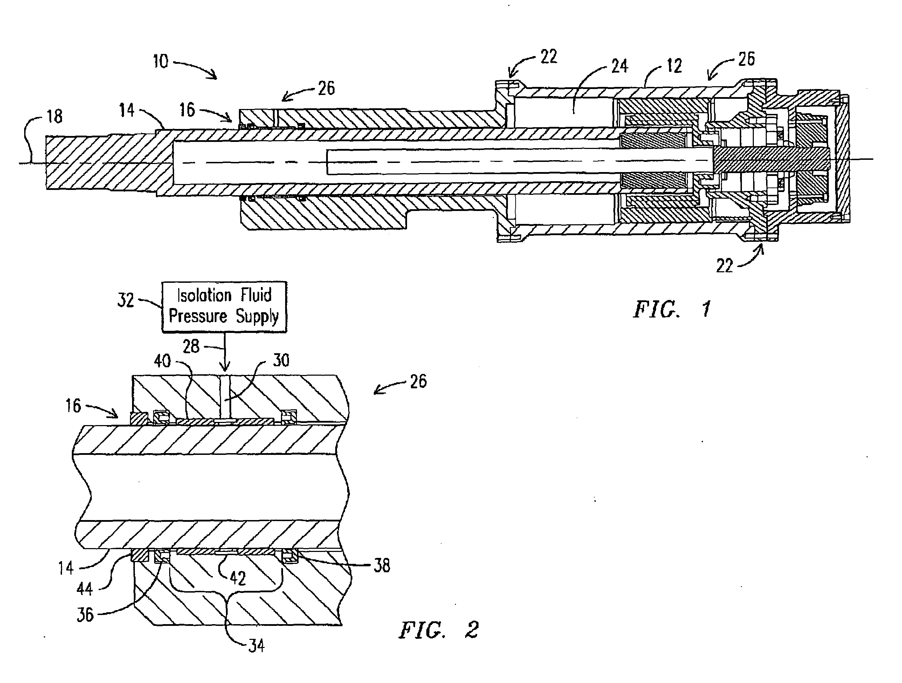

A cross-sectional view of a submersible linear actuator 10 in accordance with one embodiment of the present invention is illustrated in FIG. 1. The actuator 10 includes a housing 12 and a ram 14 (sometimes referred to in the art as an arm, piston, linkage or rod) which extends from within the housing 12 to beyond an open end 16 of the housing 12. The ram 14 is drivable in selectively reversible linear motion along a longitudinal axis 18 of the actuator 10 by an electro-mechanical drive mechanism 20 disposed within the housing. Particular design details of the electro-mechanical drive mechanism 20 for powering the motion of the ram 14 of actuator 10 are not considered to be critical to the present invention.

Subsections of the housing 12 are joined together and sealed to prevent the incursion of seawater with any style of joint 22 known in the art, such as with bolted/gasketed flange joints. The annular space between the outside surface of the ram 14 and the inside surface of the open end 16 of the housing 12 must be sealed with a dynamic seal to allow for the linear movement of the ram 14 relative to the housing while preventing the incursion of seawater into the interior region 24 of the housing 12.

Known mechanical seals such as labyrinth seals, knife edge seals and/or ring seals may be used to seal a linear actuator ram; however, for high pressure deep submergence applications, the inevitable leakage past such mechanical seals would shorten the life of the actuator and would suggest the use of leak-off plumbing and the resulting penetrations into the submarine hull.

To overcome the limitations of prior art designs, the present inventor has innovatively developed a deep submergence linear actuator seal configuration that delivers a pressure compensated isolation fluid to only an isolation region defined between an opposed pair of gland seals disposed along the ram 14 within the housing 12. By avoiding the pressurization of the entire actuator interior as is done in prior art designs, the problem of a variable interior fluid volume is solved while the positive sealing characteristics of a pressure compensated hydraulic seal are retained. Details of one embodiment of this invention are illustrated in FIG. 2, which is an enlarged view of the pressure compensated gland seal assembly 26 of FIG. 1. The ram 14 passes through the open end 16 of the housing 12 such that the ram 14 is exposed to sea water pressure exterior to the actuator 10 on the left side of FIG. 2, and is exposed to essentially atmospheric pressure within the interior region 24 of the actuator 10 on the right side of FIG. 2. Pressure compensated isolation fluid 28, such as oil, enters via an inlet port 30 formed in the housing 12. The pressure of the isolation fluid 28 is maintained above the exterior sea water pressure (for example 15-30 psi higher) by an isolation fluid pressure supply 32 via any known scheme. One skilled in the art will appreciate that a pressure compensated supply has advantages for applications where the exterior pressure varies greatly during use of the actuator, such as submarine applications; however, a fixed high pressure fluid supply could be used so long as the supply pressure is at least minimally higher than the pressure existing on the exterior of the actuator. The isolation fluid 28 is supplied to an isolation region 34 defined between an exterior surface of the ram 14 and an interior surface of the housing 12 and between an first dynamic seal 36 and a lower dynamic seal 38. The first dynamic seal 36 excludes any sea water from entering the actuator 10 due to the higher pressure being maintained in the isolation region 34. The pressure differential across the first dynamic seal 36 is dictated by the design of the pressure compensated isolation fluid pressure supply 32 and is relatively low. The pressure differential across the second dynamic seal 38 is greater than the exterior sea pressure because the interior region 24 of the actuator 10 is maintained at about atmospheric pressure while pressure in the isolation region 34 is maintained at greater than the exterior sea water pressure. Therefore, the second dynamic seal 38 is a relatively high pressure seal compared to the relatively low pressure first dynamic seal 36. Any known type of gland seal may be used for these seals 36, 38, with the second dynamic seal 38 being a typical hydraulic cylinder seal (approximately 1,000 Δpsi) in one embodiment. One will appreciate that the pressure differential across the second dynamic seal 38 will vary with the depth of submergence of the actuator, whereas the pressure differential across the first dynamic seal 36 will be relatively constant in response to the pressure compensating action of the isolation fluid pressure supply 32.

Advantageously, any possible leakage across the first dynamic seal 36 should be minimized because of the relatively low pressure differential across that seal, and it will be in the direction of isolation fluid flowing out of the actuator 10 rather than sea water flowing into the actuator 10. Any possible leakage across the relatively higher pressure second dynamic seal 38 should be tolerable provided that the isolation fluid 28 is selected to be benign to any component of the electro-mechanical drive mechanism 20 exposed within the interior region 24 of the actuator. In one embodiment, the isolation fluid 28 is the same type of fluid as is used for lubrication of the moving parts of the electro-mechanical drive mechanism 20.

FIG. 2 also illustrates a linear bushing 40 disposed within the isolation region 34. The bushing 40 functions to resist radial loads and bending moments. While it is desirable to position a load-bearing bushing close to the opening 16 in order to optimize its mechanical advantage, it is also desirable to position a seal assembly close to the opening 16 to minimize ingress of sea water. The embodiment of FIG 2 innovatively eliminates the possible conflict between these two design objectives by positioning the bushing 40 within the pressure compensated gland seal assembly between the first and second dynamic seals 36, 38. This design also ensures that the bushing 40 is not exposed to sea water. In order to allow the free flow of the pressure compensated isolation fluid 28 between the seals 36, 38, the bushing 40 may include one or more fluid flow passages 42, such as holes, grooves or cut-outs in various embodiments. The isolation fluid 28 also provides lubrication for the bushing 40. Further, in order to protect the first dynamic seal 36 from possible damage due to debris carried by the sea water, an optional scraper seal 44 may be located outboard of the first dynamic seal 36.

While various embodiments of the present invention have been shown and described herein, it will be obvious that such embodiments are provided by way of example only. Numerous variations, changes and substitutions may be made without departing from the invention herein. Accordingly, it is intended that the invention be limited only by the spirit and scope of the appended claims.

## Claims

1. A deep submergence linear actuator comprising:
a housing;
a ram extending from within the housing through an open end of the housing;
an electro-mechanical drive mechanism disposed within the housing distal to the open end of the housing and configured to drive the ram in selectively reversible linear motion relative to the housing;
a first dynamic seal disposed between an outside surface of the ram and an inside surface of the housing inboard of the open end of the housing;
a second dynamic seal disposed between the outside surface of the ram and the inside surface of the housing and disposed between the first dynamic seal and the electro-mechanical drive mechanism;
an isolation region defined between the ram and the housing and between the first and second dynamic seals; and
a pressure compensated isolation fluid supply in fluid communication with the isolation region for maintaining an isolation fluid in the isolation region at a pressure greater than a fluid pressure existing exterior to the housing.

2. The deep submergence linear actuator of claim 1, further comprising a bushing disposed within the isolation region between the first and second dynamic seals.

3. The deep submergence linear actuator of claim 2, further comprising a fluid passage formed in the bushing for conveying the isolation fluid.

4. The deep submergence linear actuator of claim 1, 2 or 3, further comprising a scraper seal disposed between the outside surface of the ram and the inside surface of the housing outboard of the first dynamic seal.

5. The deep submergence linear actuator of any preceding claim, wherein the isolation fluid is the same type of fluid as is used for lubrication of the electro-mechanical drive mechanism.

6. A deep submergence linear actuator comprising:
a housing submersible in an exterior fluid;
a ram extending from within the housing through an open end of the housing;
an electro-mechanical drive mechanism disposed within an interior region the housing and configured to drive the ram in selectively reversible linear motion relative to the housing; and
an isolation region established between the ram and the housing, and between the open end of the housing and the electro-mechanical drive mechanism, wherein the isolation region is pressurized with an isolation fluid to a pressure greater than a pressure of the exterior fluid to isolate the interior region of the housing from exterior fluid ingress.

7. The deep submergence linear actuator of claim 6, further comprising a first dynamic seal disposed between an outside surface of the ram and an inside surface of the housing inboard of the open end of the housing, and a second dynamic seal disposed between the outside surface of the ram and the inside surface of the housing and disposed between the first dynamic seal and the electro-mechanical drive mechanism thereby establishing the isolation region.

8. The deep submergence linear actuator of claim 6 or 7, further comprising a pressure compensated isolation fluid supply in fluid communication with the isolation region for maintaining an isolation fluid in the isolation region at a pressure greater than a fluid pressure existing exterior to the housing.

9. The deep submergence linear actuator of claim 8, further comprising a bushing disposed within the isolation region between the first and second dynamic seals and a fluid passage formed in the bushing for conveying the isolation fluid.

10. A pressure compensated seal for a deep submergence linear actuator, comprising:
a first dynamic seal disposed between an axially moveable ram member and a housing of the actuator and inboard of an opening of the housing through which the ram extends and distal to an electro-mechanical drive mechanism that drives the ram member;
a second dynamic seal disposed between the ram member and the housing inboard of the first dynamic seal and between the first dynamic seal and the electro-mechanical drive mechanism forming an isolation region between the first and second dynamic seals;
wherein the first dynamic seal forms a pressure seal between an exterior of the housing and the isolation region that is lower than a pressure seal between the isolation region and an interior region of the housing that is inboard of the second dynamic seal; and
an isolation fluid supply providing pressure compensated isolation fluid to the isolation region and responsive to a submergence pressure existing at the exterior of the housing.

11. The pressure compensated seal for a deep submergence linear actuator of claim 10, wherein the isolation fluid is compatible with components of the electro-mechanical drive mechanism.
